# EUROPEAN PATENT APPLICATION

(11) **EP 4 332 650 A2**
(43) Date of publication of application: **06.03.2024**
(21) Application number: 23217557.0
(22) Date of filing: 06.02.2023
(51) Int. Cl.: G02B 6/38

(54) **VERTICAL PLACEMENT SILICON PHOTONICS OPTICAL CONNECTOR HOLDER & MOUNT**

(30) Priority: 04.02.2022 US 202263306808 P; 23.06.2022 US 202217848225
(62) Divisional of application: 23155064.1
(71) Applicant: Avago Technologies International Sales Pte. Limited, Singapore 768923 (SG)
(72) Inventor: Meadowcroft, David John Kenneth, Framlingham, IP13 9JY (GB)
(74) Representative: Bosch Jehle Patentanwaltsgesellschaft mbH

(57) **Abstract**

A coupled optic system is disclosed. The coupled optic system includes an optic system. The optic system includes a frame, one or more interface lenses, a lid, and one or more frame alignment surfaces. The coupled optic system further includes an optical connector. The optical connector includes one or more connector lenses, an optical connector holder, and one or more holder alignment surfaces. The optic system is configured to be removably couplable to the optical connector, and the one or more frame alignment surfaces are configured to be removably couplable to the one or more holder alignment surfaces.

## Description

The present disclosure claims the benefit under 35 U.S.C. § 119(e) of U.S. Provisional Patent Application Serial No. 63/306,808, filed February 4, 2022, entitled VERTICAL PLACEMENT SILICON PHOTONICS OPTICAL CONNECTOR HOLDER & MOUNT, naming David John Kenneth Meadowcroft as inventor, which is incorporated herein by reference in the entirety.

The present disclosure also incorporates the following applications by reference in their entirety: U.S. Patent Application No. 17/732,002 titled "SILICON PHOTONIC EDGE COUPLED CONNECTOR VIA COLLIMATION" filed on April 28, 2022; and U.S. Provisional Patent Application Serial No. 63/306,870, filed February 4, 2022, entitled SILICON PHOTONIC EDGE COUPLED CONNECTOR VIA COLLIMATION, naming Rebecca Schaevitz, Near Margalit, Vivek Raghunathan, Dicky Lee, and Hari Potluri as inventors.

Co-Packaged Optics (CPO) is an advanced heterogeneous integration of optics and electronics in a single package aimed at addressing next generation bandwidth and power challenges.

As data rates increase there is a strong trend to move high-speed electrical signals of a transceiver closer to the switch silicon. This is giving rise to co-packaged optics (CPOs) (e.g., the mounting of transceiver optics next to switch silicon). These CPOs are becoming increasingly miniature and giving rise to the use of Silicon Photonics.

Generally, Photonic Integrated Circuits (PICs) have a light input and a light output. Typically, the input on the transmitter side of the PIC is continuous wave (CW) light which is modulated and sent into the output. The input on the receiver side of the PIC is modulated light which is then converted into electrical signals.

The typical solution for inputting and outputting light from photonics integrated circuits (PICs) is to actively align a block of optical fibers (e.g., fiber block) and glue (e.g., epoxy) the optical fibers in place. This is known as pigtailing.

The issue with pigtailing a fiber optic cable is that the structure can become very unwieldy and hard to manage, especially for a CPO with a switch chip which can have many hundreds of fibers for the inputs/outputs.

Lastly, a pigtailed solution has the problem that if one of the hundreds of fiber optic cables is accidentally broken the whole structure may become useless and may need to be scrapped. This can be costly.

In one aspect, embodiments of the inventive concepts disclosed herein are directed to optic systems and optical connectors configured for removably couplable alignment.

In some embodiments, the optic system includes a frame, one or more interface lenses, a lid, and one or more frame alignment surfaces.

In some embodiments, the optical connector includes one or more connector lenses, an optical connector holder, and one or more holder alignment surfaces. In some embodiments, the optic system is configured to be removably couplable to the optical connector, and the one or more frame alignment surfaces are configured to be removably couplable to the one or more holder alignment surfaces.

According to an aspect, an optic system is provided comprising:
a frame;
one or more interface lenses coupled to the frame;
a lid coupled to the frame and configured to rotate from an open position to a closed position,
wherein the optic system is configured to be removably couplable to an optical connector.

Advantageously, the optic system further comprises two or more frame alignment surfaces.

Advantageously, the two or more frame alignment surfaces being pins orthogonal to an optical axis of the one or more interface lenses.

Advantageously, the lid includes one or more springs configured to apply a force to the optical connector when the lid is in the closed position.

Advantageously, the optic system is configured to be edge coupled with the optical connector.

Advantageously, the one or more interface lenses are configured to be collimating.

Advantageously, the optic system further comprises one or more optic alignment surfaces.

Advantageously, the frame is configured to be thermally coupled to a co-packaged optics system.

Advantageously, the lid is configured to have one or more lid members configured to align with lid member surfaces of the optic system when the lid is in the closed position to provide for a locking of the lid in the closed position.

Advantageously, the optic system further comprises one or more optical connector guides configured to guide the optical connector towards being removably coupled with the optic system.

Advantageously, the optic system further comprises one or more stops configured to restrain the optical connector in a Z-direction defined along an optical axis of the one or more interface lenses.

Advantageously, the optic system further comprises a shelf and a support member configured to provide structural support to the shelf.

Advantageously, a spacer is disposed between the support member and the shelf.

Advantageously, the optic system further comprises a pin coupled to the frame and coupled to the lid, the pin between the frame and the lid such that the lid being coupled to the frame is an indirect coupling.

According to an aspect, an optical connector is provided comprising:
one or more connector lenses;
an optical connector holder coupled to the one or more connector lenses; and
one or more holder alignment surfaces coupled to the optical connector holder,
wherein the optical connector is configured to be removably couplable to an optic system.

Advantageously, the one or more holder alignment surfaces comprise two or more voids defined by the optical connector holder.

Advantageously, the optical connector comprises one or more connector alignment surfaces aligned parallel to an optical axis of the one or more connector lenses.

Advantageously, the one or more connector alignment surfaces are configured to be removably couplable with one or more optic alignment surfaces of the optic system.

According to an aspect, a coupled optic system is provided comprising:
an optic system comprising:
   a frame;
   one or more interface lenses coupled to the frame;
   a lid coupled to the frame and configured to rotate from an open position to a closed position; and
   one or more frame alignment surfaces;
an optical connector comprising:
   one or more connector lenses;
   an optical connector holder coupled to the one or more connector lenses;
   one or more holder alignment surfaces coupled to the optical connector holder,
wherein the optic system is configured to be removably couplable to the optical connector, and the one or more frame alignment surfaces are configured to be removably couplable to the one or more holder alignment surfaces.

Advantageously, the optic system is configured to be edge coupled with the optical connector.

It is to be understood that both the foregoing general description and the following detailed description are exemplary and explanatory only and should not restrict the scope of the claims. The accompanying drawings, which are incorporated in and constitute a part of the specification, illustrate exemplary embodiments of the inventive concepts disclosed herein and together with the general description, serve to explain the principles.

### BRIEF DESCRIPTION OF THE DRAWINGS

The numerous advantages of the embodiments of the inventive concepts disclosed herein may be better understood by those skilled in the art by reference to the accompanying figures in which:
FIG. 1 shows a schematic diagram of a coupled optic system;
FIG. 2 shows an optic system including a lid in an open position according to an exemplary embodiment;
FIG. 3A shows an optical connector and an optic system according to an exemplary embodiment;
FIG. 3B shows an optical connector removably coupled to an optic system including a lid in an open position according to an exemplary embodiment;
FIG. 3C shows a coupled optic system including optical connector guides and stops according to an exemplary embodiment;
FIG. 4 shows an optic system including a shelf and optic alignment surfaces according to an exemplary embodiment;
FIG. 5A shows a top view of an optical connector according to an exemplary embodiment;
FIG. 5B shows a bottom view of an optical connector according to an exemplary embodiment;
FIG. 6 shows an optic system in the context of a co-packaged optics system according to an exemplary embodiment;
FIG. 7 shows a lid including a covering according to an exemplary embodiment;
FIG. 8A shows coupled optic system including a support member according to an exemplary embodiment; and
FIG. 8B shows a side view of an optic system including a support member and a spacer according to an exemplary embodiment.

### DETAILED DESCRIPTION

Before explaining at least one embodiment of the inventive concepts disclosed herein in detail, it is to be understood that the inventive concepts are not limited in their application to the details of construction and the arrangement of the components or steps or methodologies set forth in the following description or illustrated in the drawings. In the following detailed description of embodiments of the instant inventive concepts, numerous specific details are set forth in order to provide a more thorough understanding of the inventive concepts. However, it will be apparent to one of ordinary skill in the art having the benefit of the instant disclosure that the inventive concepts disclosed herein may be practiced without these specific details. In other instances, well-known features may not be described in detail to avoid unnecessarily complicating the instant disclosure. The inventive concepts disclosed herein are capable of other embodiments or of being practiced or carried out in various ways. Also, it is to be understood that the phraseology and terminology employed herein is for the purpose of description and should not be regarded as limiting.

As used herein a letter following a reference numeral is intended to reference an embodiment of the feature or element that may be similar, but not necessarily identical, to a previously described element or feature bearing the same reference numeral (e.g., 1, 1a, 1b). Such shorthand notations are used for purposes of convenience only, and should not be construed to limit the inventive concepts disclosed herein in any way unless expressly stated to the contrary.

Further, unless expressly stated to the contrary, "or" refers to an inclusive or and not to an exclusive or. For example, a condition A or B is satisfied by anyone of the following: A is true (or present) and B is false (or not present), A is false (or not present) and B is true (or present), and both A and B are true (or present).

In addition, use of the "a" or "an" are employed to describe elements and components of embodiments of the instant inventive concepts. This is done merely for convenience and to give a general sense of the inventive concepts, and "a" and "an" are intended to include one or at least one and the singular also includes the plural unless it is obvious that it is meant otherwise.

Moreover, while various components may be described or depicted as being "coupled" or "connected", any two components capable of being so associated can also be viewed as being "couplable," to each other to achieve the desired functionality. Specific examples of couplable include but are not limited to physically mateable, physically fixed relative to another component, and/or physically interacting components. Other examples include being optically coupled, such as being optically aligned and configured to direct an optical signal being two components. Also, while various components may be depicted as being connected or coupled directly, direct connection or direct coupling is not a requirement. For example, components may be indirectly coupled (e.g., couplable) through some interface, device, or intermediate component whether physically (e.g., physically mated), optically, mechanically (e.g., via dynamically movable and physically interactable components), electrically, or otherwise. For example, components may be in data communication (e.g., optical signal communication) with intervening components that are not illustrated or described. It may be appreciated that "data communication" refers to both direct and indirect data communication (e.g., there may be intervening components). In one example, being coupled is permanent (e.g., two components epoxied, fused, and/or the like). In another example, being coupled is reversible (e.g., being "removably" coupled/couplable). For example, "removably" coupled/couplable may mean being capable of being coupled and uncoupled repeatedly and/or non-destructively (e.g., such as by being coupled by being temporarily held, clamped, pinned, latched, positioned, and/or the like in place). For example, an optical connector of the present disclosure, in at least some embodiments, may be removably coupled (e.g., couplable) to the optic system.

In addition, "edge" coupled, "edge" couplable, and the like may mean being in (and/or configured to be in) an edge coupling to an edge (e.g., such as an edge of a chip and/or PIC). Generally, there are mainly two types of optical fiber-to-chip optical couplings used: off-plane (vertical, out of plane, and the like) coupling and in-plane (butt) coupling. The former typically uses grating couplings and edge couplings are used with the latter. For example, grating couplings provide for off-plane coupling of light onto PICs utilizing an optical fiber positioned above a substrate/wafer surface (e.g., a portion of a length of the optical fiber being above and parallel to the substrate surface). On the other hand, for example, the substrate may utilize narrow etched areas around the edge of a die to facilitate access to edge couplers.

Further, "alignment" may mean any alignment, such as structural and/or optical alignment. For example, components may be optically aligned such that an optical axis of a first component is orientated relative to an optical axis of a second component (e.g., to within a given tolerance such that efficiency losses of an optical signal between the optical axes of the two components are minimized). In another example, structural alignment may mean that one component is orientated (e.g., and/or configured to be orientated) relative to another component (e.g., via one or more degrees of freedom and/or to within one or more alignment tolerances of such degrees of freedom). For instance, one component may be aligned to another component to within a tolerance in regards to six degrees of freedom, such as to within a quantity of a unit of translation (e.g., 1 micron) in an X, Y, and Z direction and a quantity of a unit of rotation about the X, Y, and Z direction.

In at least some embodiments, an alignment is provided for by one or more alignment surfaces. For example, an alignment surface may be a physically mateable and/or guidable surface that is configured to mate with and/or guide a different alignment surface of a different component, thereby providing for the alignment of the different component via such mateable (and/or guiding) alignment surfaces. For instance, such an alignment surface (e.g., comprising multiple alignment surfaces in different orientations) may be configured to constrain one or more degrees of freedom of the different component (e.g., due to the shape and orientation of such alignment surfaces).

Generally, active alignment is alignment performed in a well-controlled environment compared to passive alignment. Active alignment processes are typically much more costly and more time consuming to perform than passive alignment processes and are less practical to perform in the field.

For example, "active" alignment, being "actively" aligned, and the like may mean that active alignment techniques are required and/or conducive for such an alignment, and/or that a system is configured for being made/coupled using active alignment techniques (e.g., actively placed to within specific alignment tolerances). For example, active alignment techniques may be viewed as an alignment (e.g., permanent alignment) provided for using well-controlled alignment processes and/or precision tools. Precision tools may mean tools that are not necessarily available when an aligned component is in the field (e.g., away from its location of manufacture, in a practical and/or natural use case). In one example, an active alignment means using an imaging measurement system to align optical fibers with respective light sources and test equipment to test the optical signal launched into the optical fiber by the light source as the optical signal passes out of the opposite end of the fiber. By using these active alignment processes and active alignment equipment, a determination can be made as to whether the light source and the optical fiber are in precise alignment with one another. For instance, mechanical robotic grippers with precisely controllable (e.g., to within a few microns or less) degrees of freedom may grip one or more optical fibers until a desired alignment tolerance is met and hold the optical fibers while they are then permanently fixed in place (e.g., epoxied).

On the other hand, passive alignment, being passively aligned, and the like may mean that passive alignment techniques are required and/or conducive for such an alignment, and/or that a system is configured for being made/coupled using passive alignment techniques (e.g., to within specific alignment tolerances). For example, passive alignment may mean placing an optical connector by hand or with minimal tools (e.g., hand-operated tool such as tweezers). Such passive alignment may further mean utilizing the aide of passive guidance of one or more alignment surfaces (e.g., vertical pins, horizontal grooves). Passive guidance may mean guidance using little to no external tools (e.g., using just a user's hand and the alignment surfaces of the system itself). For example, one or more initial alignment surfaces (e.g., vertical pins) may initially keep a component constrained (passively) to a relatively rough tolerance, while one or more second alignment surfaces (e.g., as mateable surfaces, v-grooves) may provide for the ultimate (passive) alignment to a more precise tolerance. Such an example is for illustrative purposes and any combination and configuration of passive alignment surfaces and passive alignment processes may be used.

Finally, as used herein any reference to "one embodiment," "embodiments", or "some embodiments" means that a particular element, feature, structure, or characteristic described in connection with the embodiment is included in at least one embodiment of the inventive concepts disclosed herein. The appearances of the phrase "in at least one embodiment" in the specification does not necessarily refer to the same embodiment. Embodiments of the inventive concepts disclosed may include one or more of the features expressly described or inherently present herein, or any combination or sub-combination of two or more such features.

For purposes of the present disclosure, in at least some embodiments, it is noted that a Z-direction may be parallel with an optical axis of a lens (e.g., an interface lens), a Y-direction may be normal to a plane containing optical axes of one or more interface lens 204 (e.g., vertical), and an X-direction orthogonal thereto (e.g., horizontal). However, it should be noted that components described in respect to such directions are described for clarity purposes and such descriptions should not be seen as limiting to all embodiments of the present disclosure. For example, in some embodiments the optical axes of interface lenses are not necessarily aligned such that one plane contains all optical axes and in such an embodiment the Y-direction may be similarly defined but for a normal to plane containing a subset of the optical axes or based on the direction that an optical connector is placed from, such as in a vertical direction.

Generally, a lens (e.g., interface lens 204, optical connector lens 312, surface of a lens, and the like) is a component/element comprising at least partially transparent material configured to (e.g., shaped to) direct an electromagnetic beam. For example, a lens may be configured to collimate, disperse, and/or concentrate one or more portions of a beam (or multiple beams). For example, a lens may mean a single structure used to direct multiple beams (e.g., corresponding to multiple optical fibers 104).

Broadly, at least some embodiments of the inventive concepts disclosed herein are directed to removably couplable optical components. In some examples, the removable coupling may be between an optic system and an optical connector. A nonlimiting example of an optic system and an optical connector and various related elements are described in U.S. Patent Application No. 17/732,002 titled "SILICON PHOTONIC EDGE COUPLED CONNECTOR VIA COLLIMATION" filed on April 28, 2022, which is incorporated herein by reference in its entirety. It should be noted, however, that concepts herein may be used with various optic systems and optical connectors, such as, but not limited to, optic systems configured for non-collimated light, any optic system and/or optical connector known in the art, and the like.

In some embodiments, the optical connector and the optic system are configured to be edge coupled. For example, this disclosure includes at least one embodiment directed to co-packaged optics (CPO) next to a switch application specific integrated circuit (ASIC) with an edge coupled optical connector utilizing collimated light and coupled to the inputs and outputs of a silicon photonic integrated circuit (PIC).

One of the challenges in silicon photonics is getting the light on and off the silicon in a low cost, high volume manufacturable way. In co-packaged optics (CPO), silicon photonics are located on the same package as other silicon integrated circuits (IC), such as a switch application specific integrated circuit (ASIC).

In some approaches, in order for the optical fibers to effectively transmit an optical signal, the interface lenses of the optic system must be within a certain alignment tolerance with the optical connector lens of the optical connector. This alignment allows the optical fibers to transmit their signal to an appropriate receiver at appropriate/required efficiency levels.

One approach to coupling optical fibers to a CPO system relies on butting up (pigtailing) optical fibers to silicon photonics, and permanently fixing the optical fibers in place. For example, the optical fibers may be aligned (actively) and fixed in place by an adhesive (e.g., epoxy). In this regard, an end of the optical fibers may, in a sense, be permanently attached to the silicon photonics and the other end may use standard optical connectors (e.g., multi-fiber push-on (MPO) or LC connectors). It is contemplated herein that such a configuration may work reasonably well in transceiver-based technologies, where the solution is typically fully packaged and the alignment of the entire assembly well controlled, but may present challenges in CPO applications.

A challenge of such a configuration is that the optical connector may typically be small, translucent, delicate, brittle, and hard to handle and locate. Other challenges of coupling optical fibers include that the optical fibers may transmit laser light that could damage the eyes of a user.

In at least some embodiments, the optical connector 302 is configured to be passively aligned and passively removably coupled to the optic system 202 via one or more surfaces (e.g., alignment/guiding surfaces generally such as, but not limited to, frame alignment surfaces 502 and optic alignment surfaces 206).

Some embodiments of the present disclosure address at least some of these challenges. For example, at least some embodiments of the present disclosure allow for a coupled optic system where an array of optical fibers is much easier to locate/align (e.g., optically couple) and is not permanently attached (e.g., rather, may be removably coupled). Some embodiments include a lid to aide in protection and securing of the optical coupling. Further, some embodiments allow an operator to insert and safely secure an optical connector for use with a Co-Packaged Optics system having Photonic Integrated Circuits (CPO PIC).

For some embodiments, the coupled optic system including the optic system and the optical connector may need to survive numerous quality tests, including shock and vibration, unbiased damp heat, fiber pulling tests, and the like. Throughout these tests the optical connector may need to stay in place relative to the optic system and have minimal change in optical light input/output power. Various embodiments herein may help to ensure that the coupled optic system can pass the quality tests and be fit for a variety of purposes.

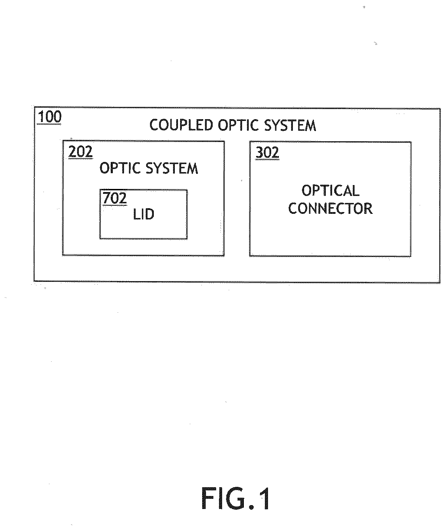

Referring to FIG. 1, a schematic diagram of a coupled optic system 100 is shown. In at least some embodiments, a coupled optic system 100 includes an optic system 202 and an optical connector 302. In some embodiments, the optic system 202 may, in a sense, be an optical communication interface to and from a circuit (e.g., PIC) and the optical connector 302 may provide for an optical coupling to such an interface allowing for data transfer to and from optical fibers 104. For example, the optic system 202 may be a part of and/or connect to a photonics integrated circuit (PIC) such that light signals may be transmitted to and/or received from the PIC.

In at least some embodiments, the optic system 202 is configured to be removably couplable with the optical connector 302. In this regard, the optical connector 302 may be nondestructively removed from being coupled to the optical connector 302 when desired.

In at least some embodiments, the optic system 202 includes one or more lids 702. For example, the lids 702 may protect the coupled optic system 100 from dust and other contaminants and may prevent light from escaping the coupled optic system 100 in a direction that may harm a user. For example, the optical connector 302 may be configured to utilize a class 4 light which may be contained, at least partially, by the lid 702. This may provide safety to human eyesight.

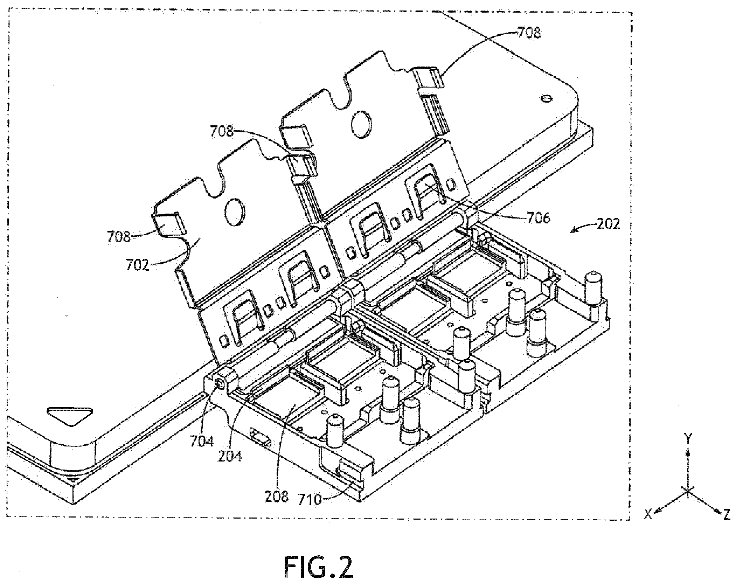

Referring to FIG. 2, an optic system 202 including two lids 702 in an open position is shown, in accordance with one or more embodiments of the present disclosure.

In embodiments, a pin 704 allows for rotation of the lid 702 to and from an open position to a closed position. The lid 702 being in the open position may allow for placing and/or removing/decoupling the optical connector 302. It should be noted that while a cylindrical pin 704 is shown as providing rotation of the lid 702, any shape and/or rotational mechanism may be used such as threaded bolts, bearings, ball and socket joints, bendable materials with a bend line parallel to the X-direction, and/or the like. The pin 704 may be an intervening component coupled between the frame 504 and the lid 702 such that the lid 702 is indirectly coupled to the frame 504 via the pin 704.

In some embodiments, an optic system 202 may include one or more lids 702, each lid 702 associated with one or more optical connectors 302. For example, each lid 702 may be associated with two or more optical connectors 302 as shown.

In embodiments, the lid 702 is made from sheet metal. In some examples, the lid 702 is made from a sheet metal stamping process and is configured to be made from a sheet metal stamping process. In some embodiments, the lid 702 is made from plastic.

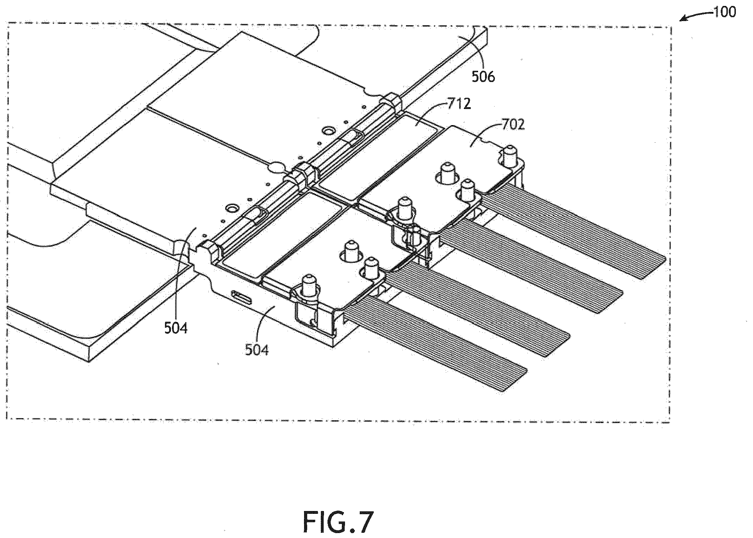

In embodiments, the lid 702 may include springs 706. For example, the springs 706 may be inbuilt as a monolithic part of the lid 702 and configured to be made via a stamping process as is shown in FIG. 7B. In embodiments, the springs 706 provide for a downward force on the optical connector 302 to keep the optical connector 302 in optical alignment with the interface lenses. In some examples, the springs 706 are configured to provide a minimum of 4 newtons of downward force. For example, the springs 706 may be configured to provide at least 4 newtons of downward force on the optical connector 302 when the lid 702 is in a closed position. In this regard, the springs 706 may push against the optical connector 302, which may help ensure the optical connector 302 stays in the optimal alignment for efficient optical coupling.

In some embodiments, the lid 702 includes two or more springs 706. For example, each spring 706 may be configured to provide downward force on a different optical connector 302 such that a single lid may be associated with two or more optical connectors 302.

In some embodiments, a lid 702 includes one or more lid members 708. For example, the lid members 708 may be used to lock the lid 702 in the closed position and may be tabs, ridges, pins, slots, holes, and the like. For instance, the lid members 708 may be configured to align with lid member surfaces 710 when the lid 702 is in the closed position. For example, lid member surfaces 710 may be recesses, holes, slots, and/or the like defined by an element (e.g., frame 504, shelf 208, and/or the like) of the optic system 202 such that when the lid 702 is rotated to a closed position, the lid member surfaces 710 lock (e.g., snap, slip into place, restrain movement, and/or the like) the lid 702 into the closed position. It should be noted that lid member surfaces 710 may be configured to allow for a removable coupling of the lid to the open position by virtue of such locking being non-destructibly reversible. For example, the locking may be reversible by pulling (e.g., pulling by hand or tweezers) the locking tabs outwards to allow for rotating the lid 702 to the open position. In another example, the lid members 708 and lid member surfaces 710 allow for opening the lid 702 with adequate force in the Y-direction (i.e., without needing to directly pull the lid members 708 outwards).

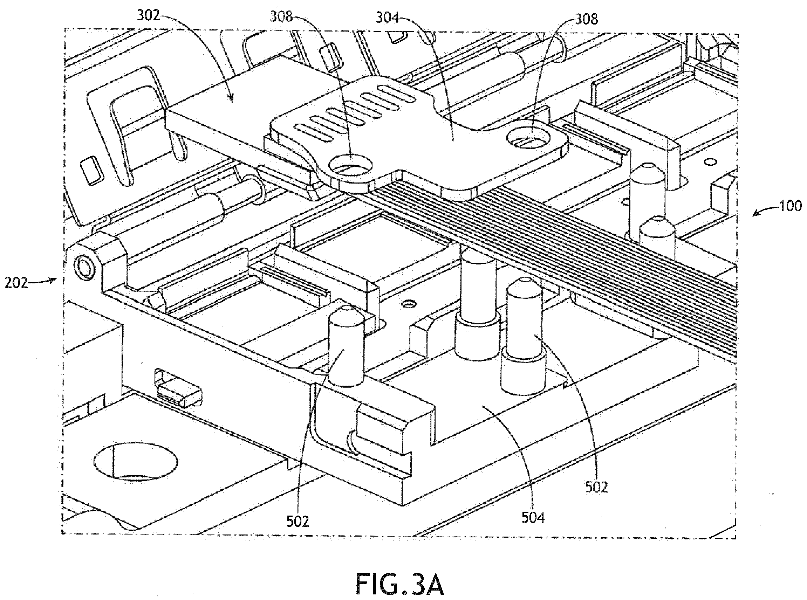

Referring to FIG. 3A, a coupled optic system 100 including an optical connector 302 and an optic system 202 are shown, in accordance with one or more embodiments of the present disclosure. Note that the optical connector 302 is positioned above the optic system 202 and is ready to be moved into place.

In embodiments, the optic system 202 includes a frame 504. It is noted that the frame 504 shown is nonlimiting and the frame 504 may be any shape and be coupled to various components. For example, the frame 504 may be configured to couple with any number of optical connectors 302 (e.g., 1, 2, 4, 10, or the like).

In embodiments, the optic system 202 includes one or more frame alignment surfaces 502. For example, the frame alignment surfaces 502 may help a user locate/align the optical connector 302 relative to the optic system 202 during a coupling. In some embodiments, the frame alignment surfaces 502 also help act as strain relief to the optical connector 302 should an external force be applied to the optical fibers 104. In some embodiments, an optical connector holder 304 comprises and defines the frame alignment surfaces 502.

In one example, the frame alignment surfaces 502 are coupled to the frame 504. For example, the frame alignment surfaces 502 may be formed from a monolithic material (e.g., injection molded, cast, 3D printed, etc.). In other examples, the frame alignment surfaces 502 are not part of the frame 504 but are coupled relative to the frame 504. In this regard, the frame alignment surfaces 502 may allow for alignment of an optical connector 302 relative to the optic system 202.

In embodiments, as shown, the frame alignment surfaces 502 are vertically aligned in the Y-direction. In this regard, the frame alignment surfaces 502 may provide for an X-direction and Z direction alignment.

In embodiments, the frame alignment surfaces 502 are shaped as pins in a vertical Y-direction to provide for an initial coarse alignment. It is noted that the frame alignment surfaces 502 as shown are only one nonlimiting example, and the frame alignment surfaces 502 may be any shape and/or in any direction of alignment. For example, the frame alignment surfaces 502 may include a square, oval, rectangular, hexagonal, or the like shape rather than a circular pin shape. In another example, the size of the frame alignment surfaces 502 may be tapered along the Y-direction and/or may include an angled chamfer (as shown) or the like at the top to aide in alignment. For instance, the frame alignment surfaces 502 may be cone-shaped, pyramid shaped, or the like. In some examples, the frame alignment surfaces 502 are not vertically aligned with the Y-direction and may be aligned at one or more angles (e.g., 5 degrees, 10 degrees, and the like) relative to the Y-direction. Likewise, the shape and/or alignment of holder alignment surfaces 308 may be any shape and/or alignment such that the holder alignment surfaces 308 matches (i.e., corresponds to) the frame alignment surfaces 502.

In some embodiments, the frame alignment surfaces 502 may be, in a sense, coarse alignment surfaces to aide in an initial alignment. Without such coarse alignment, the coupling of the optical connector 302 to the optic system 202 may be more difficult. For example, in a sense, the optic alignment surfaces 206 may be used for a later, finer alignment. Without an initial coarse alignment, the alignment of the optic alignment surfaces 206 may be difficult considering the field of view of a user is likely to be blocked by the optical connector 302 when making such an alignment and the size of the optic alignment surfaces 206 may be relatively smaller. In some embodiments, obtaining a coarser, initial alignment using the frame alignment surfaces 502, a user may more quickly and easily align the optic alignment surface 206 with the connector alignment surface 314.

In embodiments, as shown, at least one frame alignment surface 502 is located on one side of the optical axes of the optical connector 302 and at least one second frame alignment surface 502 is located on the opposite side of the optical axes. For example, one vertical alignment pin 502 may be on each side of the optical connector 302 as shown to restrain all but one degree of freedom (e.g., translation in the Y-direction).

In embodiments, the frame alignment surfaces 502 are staggered in a plane containing the X-direction and Z-direction (as shown) relative to the Z-direction to allow for relatively close positioning (i.e., efficient use of space) of optical connectors 302.

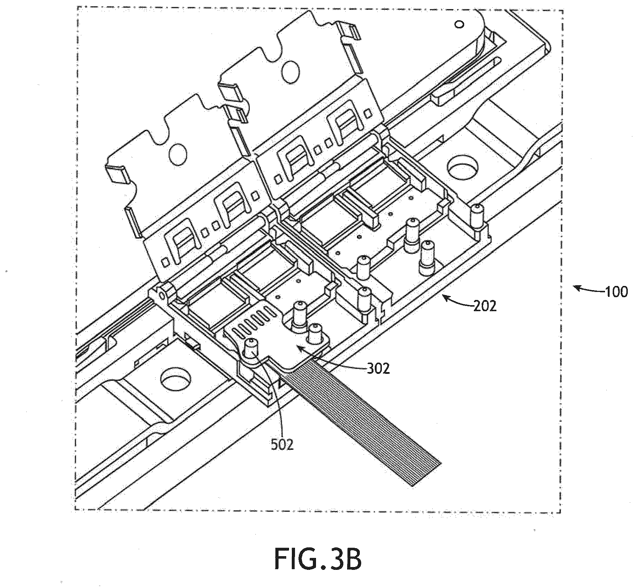

Referring to FIG. 3B, an optical connector 302 removably coupled to an optic system 202 including a lid 702 in an open position is shown, in accordance with one or more embodiments of the present disclosure. In this regard, the optical connector 302 is shown in a coupled position for illustrative purposes before the lid 702 is placed into the closed position, which would blocking such a view. In some embodiments, the frame alignment surfaces 502 couple with the optical connector 302 as shown.

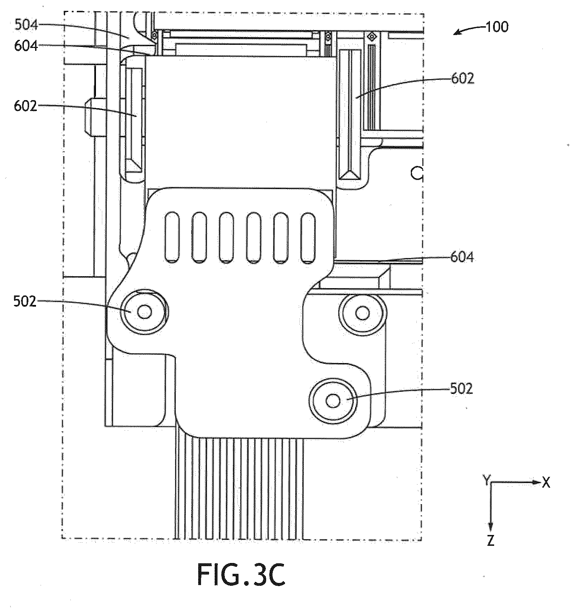

Referring to FIG. 3C, a coupled optic system 100 including optical connector guides 602 and stops 604 is shown, in accordance with one or more embodiments of the present disclosure.

In some embodiments, the optic system 202 includes one or more optical connector guides 602 coupled to the frame 504. For example, the optical connector guides 602 may act to help, in a sense, funnel/guide the optical connector 302 along a Y-direction into place during a coupling process. In some examples, the one or more optical connector guides 602 are made from injection molded plastic.

In some embodiments, the optic system 202 includes one or more stops 604. For example, the stops 604 may be configured to restrain the optical connector 302 in a Z-direction defined along an optical axis of the one or more interface lenses 204. For example, the one or more optical connector guides 602 may include such stops 604.

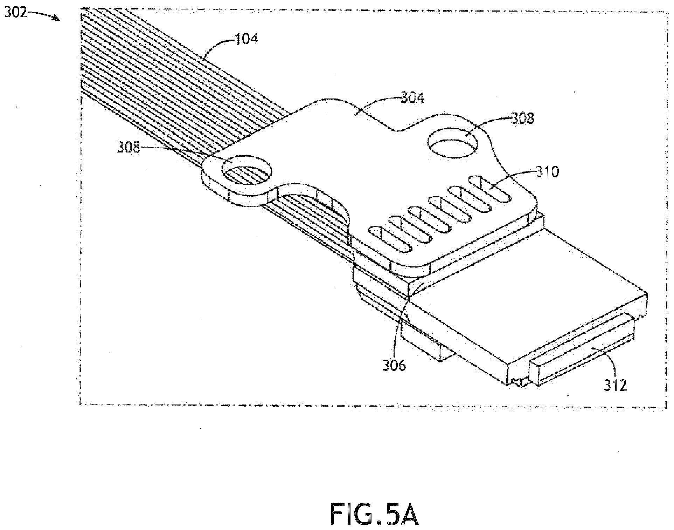

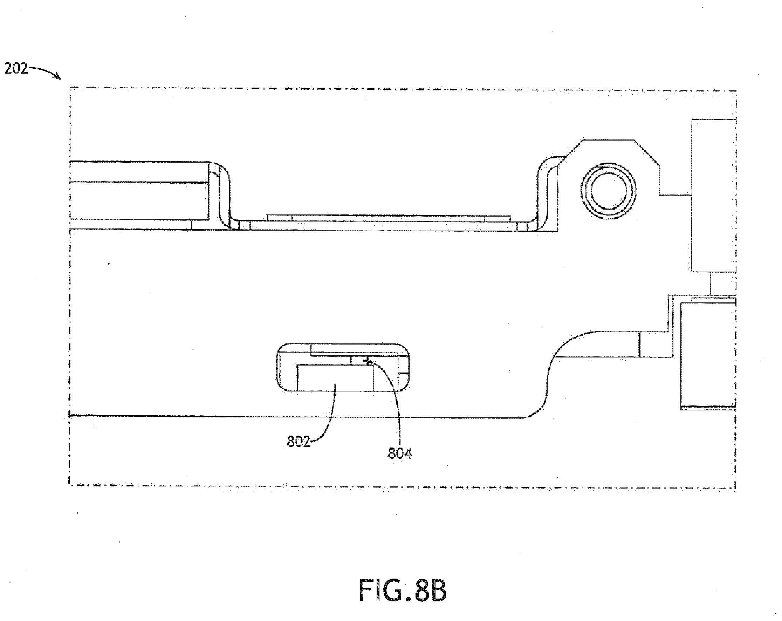

For reference of nonlimiting locations of stops 604, see stop 604 locations in FIG. 3C. For example, one stop 604 may be a portion (surface) of the frame 504 and be configured to constrain a portion (surface) of the optical connector 302. For instance, a surface of a spacer 804 (see FIG. 8B) may be a stop 804 configured to restrain an intermediary element 306 (see FIG. 5A) of the optical connector 302. Another stop 604 (as shown by the stop 604 in the lower right of FIG. 3C) may be located under the optical connector 302 and may be configured to align with a secondary portion or surface of the optic system 202. In some embodiments, stops 604 constrain the optical connector 302 to within 50 or 100 microns in the Z-direction to help optically locate the optical connector 302. For example, the stops 604 may provide for a maximum range of movement of the optical connector 302 of 50 microns in the Z-direction.

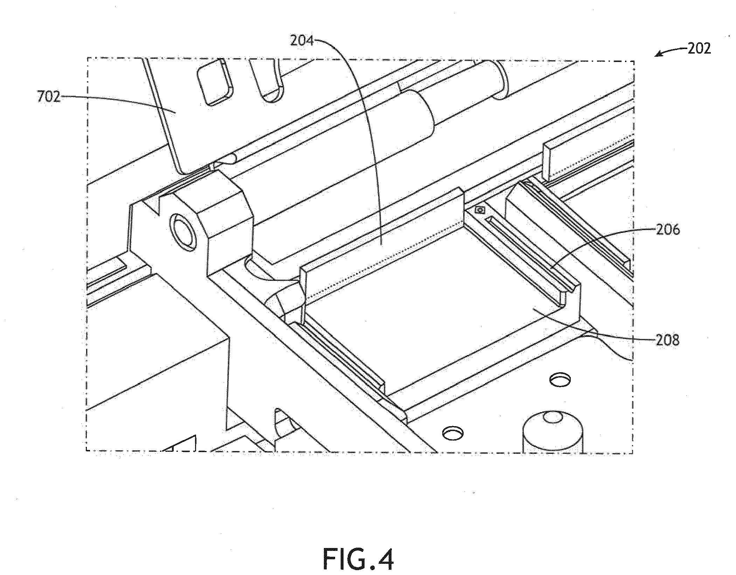

Referring to FIG. 4, an optic system 202 including a shelf 208 is shown, in accordance with one or more embodiments of the present disclosure. In embodiments, the shelf 208 includes one or more optic alignment surfaces 206. In embodiments, the shelf 208 includes a recess (not labeled) between optic alignment surfaces 206 and configured to receive a removable coupling of an optical connector 302. In some examples, the one or more interface lenses 204 are coupled to the shelf 208 such that a component (e.g., optical connector 302) that is coupled and aligned to the optic alignment surfaces 206 is also coupled and aligned to the one or more interface lenses 204. In this regard, the optic alignment surfaces 206 may be configured to allow for a precise optical coupling.

While the shelf 208 is shown as a single body with one optic alignment surface 206 on each side of a middle portion (e.g., recess), the shelf 208 is not limited to such an embodiment and the shelf 208 may, for example, include a variety of numbers, locations, shapes, and/or the like of optic alignment surfaces 206, middle portions, and any other element/limitation depicted or described. For example, the shelf 208 may have optic alignment surfaces 206 of various sizes (e.g., relatively larger sizes for a rough initial alignment in one direction and smaller sizes for a final precise alignment in a different direction), of a variety of shapes (grooves such as a V-shaped groove, trenches, rectangular notches, U-shaped grooves, pyramid-shaped surfaces, cone-shaped surfaces, vertical pins, and/or any other shape conducive to alignment), and/or in a variety of locations of the shelf 208 (e.g., on a surface of the middle portion, on a top surface (as shown), on a bottom surface, on one or more outside side surfaces, on a front surface, on a back surface, and/or the like). Similarly, any of the surfaces/elements/limitations of the optical connector 302 (e.g., the connector alignment surfaces 314, holder alignment surfaces 308) and frame alignment surfaces 502 that are described and depicted in the present disclosure are not limited to what is described and depicted and may likewise vary in number, size, location, and/or the like.

Referring to FIG. 5A, a top view of an optical connector 302 is shown, in accordance with one or more embodiments of the present disclosure.

In embodiments, the optical connector 302 includes one or more optical connector lenses 312 and an optical connector holder 304 coupled to the optical connector lenses 312. For example, the optical connector lenses 312 may be configured to align and optically couple with one or more interface lenses 204. In some examples, the optical connector holder 304 is metal. For instance, optical connector holder 304 may be configured to be stamped from a single layer of sheet metal.

In embodiments, the optical connector includes a fiber block as shown (but not labeled), which may be coupled to the optical connector lenses 312 and/or the intermediary element 306. For example, the fiber block (e.g., fiber array unit (FAU)) may be actively aligned with the optical fibers 104. In some examples, the fiber block is made of glass.

In embodiments, the one or more optical connector lenses 312 are configured to at least one of, receive and/or transmit a collimated lightbeam, or at least partially collimate a lightbeam. Further, the interface lenses 204 of the optic system may be configured to at least one of, receive and/or transmit a collimated lightbeam, or at least partially collimate a lightbeam. In this regard, the coupled optic system 100 may be used with collimated light, which may relax alignment tolerance requirements in the X, Y, and Z directions.

In some embodiments, the optical connector holder 304 is coupled to other elements (e.g., connector lenses 312) of the optical connector 302 via an intermediary element 306 such as an adhesive (e.g., flexible foam adhesive). The intermediary element 306 may help prevent a coefficient of thermal expansion mismatch from causing an optical misalignment between the optical connector 302 and the optical connector holder 304.

In embodiments, the optical connector holder 304 may include, but is not required to include, one or more holder alignment surfaces 308. For example, as shown in FIG. 3A, the holder alignment surfaces 308 may be configured to align with the frame alignment surfaces 502 (e.g., vertical pins) of the optic system 202. In this regard, the holder alignment surfaces 308 may allow for an alignment of the optical connector 302 in the Z-direction and the X-direction. As shown, the holder alignment surfaces 308 may comprise voids defined by the optical connector holder 304. In some examples, the holder alignment surfaces 308 are coplanar. For example, the holder alignment surfaces 308 may be coplanar along a plane parallel to the Z-direction and the X-direction.

In embodiments, the optical connector holder 304 may include/define relief surfaces 310. The relief surfaces 310 may be configured to minimize the amount of thermal expansion in directions relative to the alignment of the relief surfaces 310. For example, by minimizing thermal expansions, optimal optical alignment may be provided for.

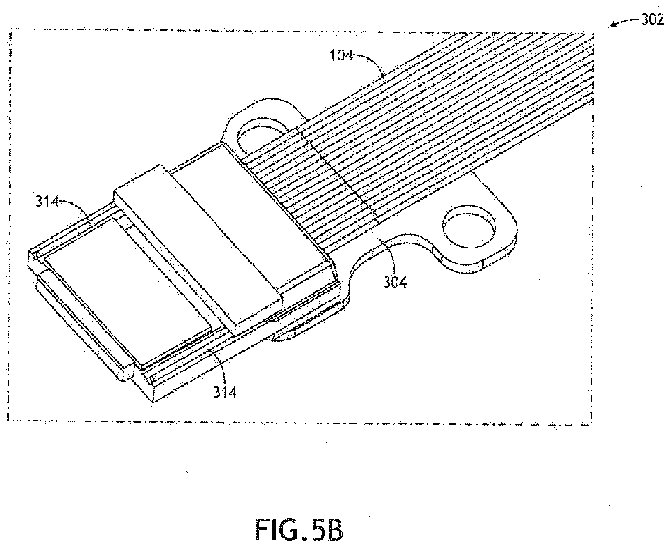

Referring to FIG. 5B, a bottom view of the optical connector 302 including connector alignment surfaces 314 is shown, in accordance with one or more embodiments of the present disclosure.

In some embodiments, the connector alignment surfaces 314 may help align/couple the optical connector 302 with the optic system 202. The connector alignment surfaces 314 may optically locate and constrain the optical connector 302 relative to the optic system 202 (e.g., relative to the interface lenses 204) in an X and/or Y direction. For example, the optic system 202 may have corresponding optic alignment surfaces 206 (e.g., V-shaped grooves) that are configured to align with the connector alignment surfaces 314. This alignment may allow for the optical connector 302 to be aligned to within 10 (or 15 or 20) microns down to a sub-micron alignment in the X and/or Y direction (e.g., 1 micron of tolerance in each direction).

In some embodiments, an optical alignment tolerance of a coupling between the optic system 202 and the optical connector 302 may be as low as 25-100 microns (e.g., 25, 50, or 100) in the Z-direction, and/or 5 - 20 (e.g., 5, 10, 15 or 20) microns in the X-direction and/or Y-direction.

In some examples, the connector alignment surfaces 314 are connector alignment rods (i.e., cylindrically rod-shaped on at least one side). In embodiments, dimensions of parts may include, but are not limited to, a length of about 5 mm and/or a diameter of about 0.22 mm for the connector alignment surfaces 314. The pitch (i.e., spacing between rod centers) may be about 6.4 mm. The frame alignment surfaces 502 may be 1.5 mm in diameter and/or may have a pitch between frame alignment surfaces 502 of 8 mm (for frame alignment surfaces 502 of the same optical connector 302).

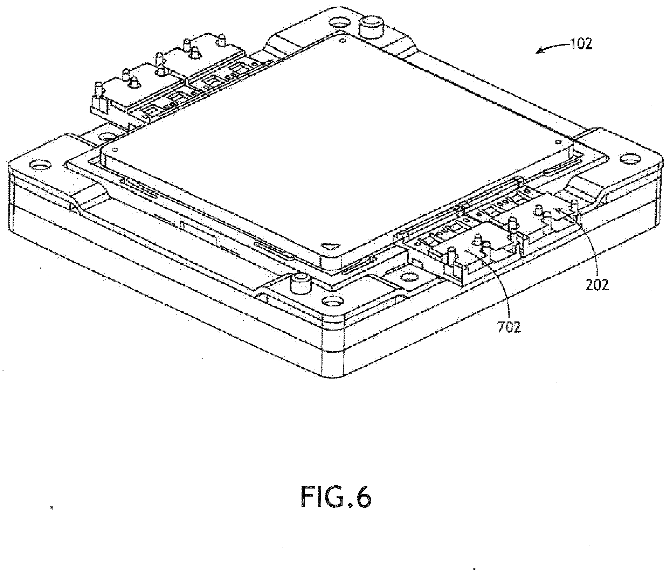

Referring to FIG. 6, an optic system 202 is shown in the context of use with a co-packaged optics system 102, in accordance with one or more embodiments of the present disclosure. For example, in some embodiments, the optic system 202 includes and/or is configured to be compatible with some or all of the elements shown. In some examples, as shown, the optic system 202 is configured for at least four optical connectors 302 per side.

Referring to FIG. 7, a lid 702 including a covering 712 is shown, in accordance with one or more embodiments of the present disclosure. The covering 712 may provide for added protection from dust, dirt, and the like and added prevention of the escape of light from the optic system 202. For example, the covering 712 may be coupled to the lid 702 and move with the lid 702. In some examples the covering 712 is located to cover holes left by stamped springs 706, and/or any other holes.

In embodiments, the frame 504 is configured to be thermally coupled to the electronic integrated circuits (EIC), the photonic integrated circuits (PIC), and/or any transceiver/receiver components such that the frame 504 acts as a heat-sink for such components. For example, as shown in FIG. 7, the frame 504 may extend towards the center of the CPO system 102 allowing for absorption of thermal energy from surrounding areas. For example, a portion of the frame 504 may be mated to the application specific integrated circuit (ASIC) side of a CPO system. Such a portion may dissipate heat to the surfaces it is thermally coupled to (e.g., the surface above and below it). For example, the portion of the frame 504 on the left side of FIG. 7 and the adhesive surface 506 may be thermally coupled together. The frame 504 may be configured to dissipate (expel) about 15-20 watts (e.g., up to 15 watts, 16 watts, 20 watts, and the like) of heat (e.g., from the optical connector).

In embodiments, the frame 504 may serve other functions. For example, the frame 504 may be shaped to protect the exterior of the shelves 208 and the optical connector 302. For example, as shown, the frame 504 may enclose and/or partially enclose portions (e.g., front, sides, bottom, and the like) of the shelves 208 and/or optical connectors 302, such as portions that are not enclosed by the lids 702 or other components.

In embodiments, the frame 504 may be made from metal. For example, the frame 504 may be copper tungsten. Such a material may have the same coefficient of thermal expansion (CTE) as other materials in the system such that optical elements (e.g., lenses) stay in alignment during a temperature change. In some examples, the frame 504 may have a relatively low CTE compared to other neighboring components such that the frame expands less than such neighboring components.

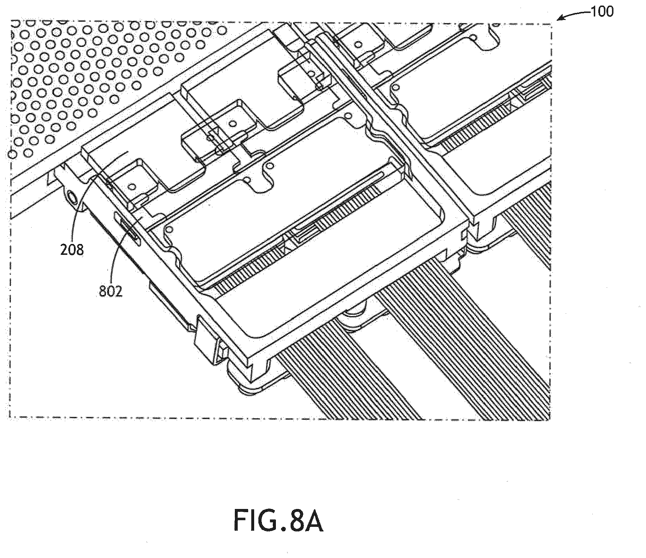

Referring to FIG. 8A, a coupled optic system 100 including a support member 802 is shown, in accordance with one or more embodiments of the present disclosure.

In some embodiments, a support member 802 may be underneath (in a Y-direction) the shelf 208. The support member 802 may prevent the shelf 208 breaking (i.e., provide structural support in a Y-direction), when inserting the optical connector 302. In this regard, the shelf 208 may be supported along the X-direction by the support member 802. It should be noted that the shelf 208 may be very brittle. For example, the shelf 208 may be made of at least one of glass and/or silicon.

In embodiments, the support member 802 and the shelf 208 are epoxied together. In some examples, the shelf 208 is not epoxied to anything else except the support member 802 and may slidably rest on the frame 504 as shown. Such a configuration may be to prevent any thermal expansion mismatch in elements/components of the optic system 202 from cracking the shelf 208. To further prevent stress on the coupled optic system 100, the support member 802 may be made from a Copper Tungsten (CuW) which may be thermal expansion matched to the shelves (e.g., silicon shelves) 208.

Referring to FIG. 8B, a side view of an optic system 202 including a support member 802 and a spacer 804 is shown, in accordance with one or more embodiments of the present disclosure.

In embodiments, the optic system 202 may include a spacer 804. The spacer 804 may be placed above (in a Y-direction) and be coupled to the support member 802 as shown. For example, the spacer 804 may be disposed between the support member 802 and the shelf 208. The spacer 804 may be configured to vary in size depending on the gap between the support member 802 and the shelf 208. For example, an active alignment of the shelf 208 may require a certain positioning of the shelf 208. The shelf 208 may be actively aligned (e.g., via controlled robotic methods) to such a location and then coupled to the support member 802 using the spacer 804. For example, the spacer 804 may be flexible (e.g., initially, before curing, and the like) and/or made from a material or process that allows it to fill a wide range of gap sizes. For instance, the spacer 804 may be an epoxy that is configured to fill a range of gap sizes when in a liquid state and configured to harden to a solid, non-flexible state to restrain the shelf 208 in a certain position relative to the support member 802 and/or interface lenses 204.

Various embodiments of the optic system 202 and the optical connector 302 will now be discussed more generally.

In some embodiments, the optic system 202 and the optical connector 302 may be configured to be used with single mode (e.g., modal) photonics. In some embodiments, the optic system 202 and the optical connector 302 may be configured to be used with Coarse Wavelength-Division Multiplexing (CWDM) photonics, which may utilize multiple channels and/or wavelengths for communicating.

In some embodiments, the collection of parts that help to protect an optical coupling of the optical connector 302 and optic system 202 may be collectively given the name "clamshell connector." In some embodiments, the interface lens 204 may also be called the PIC lens and be coupled to the PIC. In some embodiments, the optical connector 302 may include (or be) a Fiber Array Unit.

It is believed that the inventive concepts disclosed herein and many of their attendant advantages will be understood by the foregoing description of embodiments of the inventive concepts disclosed, and it will be apparent that various changes may be made in the form, construction, and arrangement of the components thereof without departing from the broad scope of the inventive concepts disclosed herein or without sacrificing all of their material advantages; and individual features from various embodiments may be combined to arrive at other embodiments. The form herein before described being merely an explanatory embodiment thereof, it is the intention of the following claims to encompass and include such changes. Furthermore, any of the features disclosed in relation to any of the individual embodiments may be incorporated into any other embodiment.

## Claims

1. An optical connector comprising:
one or more connector lenses;
an optical connector holder coupled to the one or more connector lenses; and
one or more holder alignment surfaces coupled to the optical connector holder,
wherein the optical connector is configured to be removably couplable to an optic system.

2. The optical connector of claim 1, wherein the one or more holder alignment surfaces comprise two or more voids defined by the optical connector holder.

3. The optical connector of any preceding claim, wherein the optical connector comprises one or more connector alignment surfaces aligned parallel to an optical axis of the one or more connector lenses.

4. The optical connector of claim 3, wherein the one or more connector alignment surfaces are configured to be removably couplable with one or more optic alignment surfaces of the optic system.

5. The optical connector of any preceding claim, wherein the one or more connector lenses are configured to receive and/or transmit a collimated lightbeam.

6. An optic system comprising:
a frame; and
the optical connector of any of the claims 1 - 5.

7. The optic system of claim 6, further comprising one or more interface lenses coupled to the frame.

8. The optic system of any of claims 6 to 7, further comprising a lid coupled to the frame and configured to rotate from an open position to a closed position.

9. The optic system of any of claims 6 to 8,
wherein the optical connector is configured to be removably couplable to the optic system.

10. The optic system of any of claims 6 to 9, wherein the optic system further comprises two or more frame alignment surfaces.

11. The optic system of claim 10, the two or more frame alignment surfaces being pins orthogonal to an optical axis of the one or more interface lenses.

12. The optic system of any of claims 8 to 11, wherein the lid includes one or more springs configured to apply a force to the optical connector when the lid is in the closed position.

13. The optic system of any of claims 6 to 12, wherein the optic system is configured to be edge coupled with the optical connector.

14. The optic system of any of claims 8 to 13 further comprising a pin coupled to the frame and coupled to the lid.

15. The optic system of claim 14, the pin being between the frame and the lid such that the lid being coupled to the frame is an indirect coupling.
